# EUROPEAN PATENT SPECIFICATION

(11) **EP 2 011 641 B1**
(45) Date of publication and mention of the grant of the patent: **09.10.2013**
(21) Application number: 07741526.3
(22) Date of filing: 12.04.2007
(51) Int. Cl.: B32B 27/38, B05D 7/24, B32B 9/00, B32B 27/40, B65D 65/40, B65D 81/24, C08J 7/04

(54) **GAS BARRIER FILM**
GASSPERRFILM
FILM BARRIÈRE AUX GAZ

(30) Priority: 13.04.2006 JP 2006110505
(43) Date of publication of application: 07.01.2009
(73) Proprietor: Toray Industries, Inc., Tokyo 103-8666 (JP)
(72) Inventor: ARAI, Takashi, Otsu-shi Shiga 520-0842 (JP); TATEISHI, Yasushi, Mishima-shi Shizuoka 411-0033 (JP); HIROTA, Kusato, Otsu-shi Shiga 520-0822 (JP); OKUTSU, Wataru, Takata-gun Shizuoka 419-0124 (JP); TERANISHI, Masayoshi, Sunto-gun Shizuoka 411-0931 (JP)
(74) Representative: Webster, Jeremy Mark
(86) International application number: PCT/JP2007/058090
(87) International publication number: WO 2007/119791

(56) References cited:
- EP-A- 1 219 656
- EP-A- 1 352 933
- JP-A- 2001 301 109
- JP-A- 2001 315 585
- JP-A- 2002 178 438
- JP-A- 2005 254 712
- JP-A- 2006 068 967

## Description

The present invention relates to an excellent gas barrier film, particularly an excellent gas barrier film suitable for retort utility, having excellent oxygen shielding performance and water vapor shielding performance and, further, at the same time, having good resistance to heat sterilization treatment such as retort treatment.

A gas barrier film and a wrapping material using the same are well known.

As a material having excellent barrier property, there is aluminum foil, but it alone has weak pinhole strength, can not be used except for special utility, and is used as an intermediate layer for a laminated film in almost all cases. Gas barrier property of this laminated film is excellent, but since the film is opaque, there is a defect that the content is not seen and it is difficult to determine whether it has been assuredly heat-sealed or not.

In addition, since thermoplastic films, such as a polyester film or a polyamide film, are excellent in strength, transparency, and moldability, they are used widely as a wrapping material.

However, since these thermoplastic resin films have great transmission of a gas such as oxygen and water vapor when used in wrapping general foods and retort-treated foods, storage for a long term causes change in properties or deterioration of foods in some cases.

Then, previously, in materials requiring the gas barrier property such as food wrapping materials, many films obtained by coating a polyolefin film, a nylon film, or a polyethylene terephthalate film (hereinafter, abbreviated as PET) with an emulsion of vinylidene chloride (hereinafter abbreviated as PVDC) have been used.

A film on which a PVDC layer is formed by coating exhibits high oxygen barrier property not only under a low humidity but also under a high humidity and, moreover, has high barrier property on water vapor. However, since the PVDC-coated film has a possibility of generating chlorine gas due to chlorine in PVDC, and generating dioxine at incineration upon waste treatment, and has a possibility of adversely influencing the environment and human body, transition to other materials is strongly desired.

As a gas barrier material having no chlorine, a polyvinyl alcohol (hereinafter abbreviated PVA) film and a coated film coated with PVA or an ethylene-vinyl alcohol copolymer (hereinafter abbreviated as EVOH) are best-known. Although PVA and EVOH are excellent in the oxygen gas barrier property under dry environment, they have a problem that the barrier performance depends more on humidity, and the barrier property is considerably lost under high humidity condition, the water vapor barrier property is not possessed, they are easily dissolved in hot water, and gas barrier property deterioration due to water absorption accompanied with boil retort treatment is remarkable.

For such a problem, as a polymer having improved reduction in the gas barrier property under high humidity of PVA and EVOH, a polymer consisting of a mixture of PVA and a partial neutralized product of polyacrylic acid or polymethacrylic acid (e.g. Patent Document 1) or PVA, polyitaconic acid and a metal compound (Patent Document 2) has been disclosed.

In addition, deposited films on which a deposited membrane of an inorganic oxide such as aluminum oxide and silicon oxide is provided on one side of a thermoplastic film such as a polyester film, for example with a physical vapor deposition method such as a vacuum deposition method have been proposed. These gas barrier films having an inorganic oxide-deposited thin membrane layer have an advantage that they have content visibility due to transparency, and can respond to cooking utilizing a kitchen microwave, but since films having a gas barrier coated layer consisting of an inorganic oxide-deposited layer have a hard gas barrier layer, there is a problem that a crack or a pinhole is generated in the gas barrier layer due to bending and the gas barrier property is remarkably reduced.

As a known technique of making up for such a shortcoming, a method of providing an inorganic oxide-deposited layer on a thermoplastic resin film and, further, laminating a gas barrier layer on the deposited layer by polymer coating to improve the gas barrier property or flexibility has been disclosed (Patent Documents 3, 4).

However, any of the techniques of Patent Documents 1 and 2 tries to improve the barrier property under high humidity by crosslinking with an ester bond and, in these methods, in order to sufficiently progress esterification to enhance the gas barrier property of a film, it is necessary to heat to a high temperature for a reaction, and there is a problem in productivity.

In addition, in the techniques of Patent Documents 3 and 4, when a film having a lamination construction is subjected to hot water sterilization treatment such as boil retort treatment, the adhering force between the inorganic oxide-deposited layer and the gas barrier layer is considerably reduced. That is, when such film is used, there arises a practical problem of causing delamination (peeling between layers) of a laminated film in a package wrapping foods accompanied with hot water sterilization treatment such as boil retort treatment. In addition, there is also a problem of difficulty in production that an adhering force (tack) of the gas barrier layer is strong, and a product roll obtained by winding in a processing step causes blocking.
Patent Document 1 : Japanese Patent Application Laid Open (JP-A) No. 10-237180 (paragraphs 0060-0065)
Patent Document 2: JP-A No. 2004-35833 (paragraphs 0061-0066)
Patent Document 3: JP-A No. 2002-307600 (paragraphs 0036-0050)
Patent Document 4: JP-A No. 2005-28835 (paragraphs 0047-0061)
JP-A-2001-301109 discloses a barrier film composed of a base material film, a membrane comprising an inorganic oxide on a transparent coating film containing a thermosetting epoxy resin and curing agent.
EP-A-1219656 discloses a composition for coating having a high gas barrier property comprising an epoxy resin and an amine curing agent.
JP 2002-178438 discloses a laminate of a thin film layer of a metal or an inorganic substance, a layer formed from a resin containing a resin having acrylic acid groups, an adhesive layer and a heat-sealable resin layer or a protective layer.

In view of the aforementioned background of the previous art, an object of the present invention is to provide a gas barrier film, particularly a gas barrier film suitable in retort utility, having no possibility of environmental pollution due to halogen, and being excellent in the gas barrier property on oxygen and water vapor, and retort resistance.

### Means to solve the problems

In order to solve such problems, the present invention provides gas barrier films.

That is, in order to solve such problems, a gas barrier film of the first present invention has the following construction.

That is, the gas barrier film of the first present invention is characterized in that a deposited layer formed of an inorganic compound is provided on one side of a substrate film, a gas barrier layer formed of a polyepoxy-based cured product containing a skeleton structure represented by the following formula (1) is provided on the deposited layer, and an overcoated layer having a thickness of 0.2 to 5 µm and formed of at least one kind selected from the group consisted of a polyepoxy resin and a polyester resin is provided on the gas barrier layer.

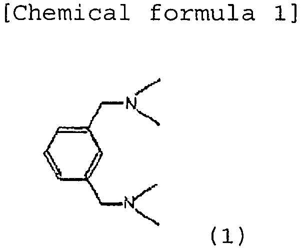

### EFFECT OF THE INVENTION

According to the present invention, a gas barrier film having the excellent characteristic that it has not only excellent oxygen barrier property and water vapor barrier property, but also retort resistance and, moreover, it does not contain a halogen such as chlorine, it does not require heat treatment at a high temperature upon formation of a gas barrier layer and, further, it does not generate blocking and is excellent in production suitability, can be provided. As a result, a gas barrier film of a wide range of utility which is useful as a film for wrapping foods which is required to have a gas barrier property, and undergoes a step of boil retort treatment can be provided.

### BEST MODE FOR CARRYING OUT THE INVENTION

In the present invention, the aforementioned obj ect, that is, a gas barrier film having no possibility of environmental pollution with halogen, and which is excellent in the gas barrier property on oxygen and water vapor, retort resistance, and production suitability was intensively studied and, by combining with a substrate film having two resin layers formed of specified polymers and an inorganic vapor thin membrane layer, formulation which is non-halogen, exhibits a high gas barrier property and retort resistance, and is also excellent in film production suitability, was found out.

That is, a gas barrier film of the present invention has a construction that a deposited layer formed of an inorganic compound is provided on one side of a substrate film, a gas barrier layer formed of a polyepoxy based cured product containing a skeleton structure represented by the following formula (1) is provided on the deposited layer, and an overcoated layer formed of at least one kind selected from the group consisting of a polyepoxy resin and a polyester resin is provided on a gas barrier layer, thereby, a gas barrier property higher than previous ones, retort resistance and excellent production suitability is obtained.

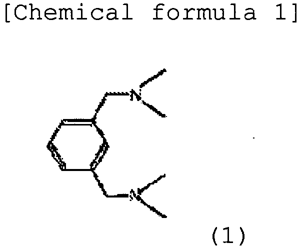

In the present invention, the gas barrier film refers to a film having a gas barrier function, and generally refers to a film having an oxygen transmission rate of 3 cc/(m²•day•atm) or less, or a film having a water vapor transmission rate of 3 g/ (m²•day) or less, without any limitation. In addition, the gas barrier layer refers to a layer having a gas barrier function, and generally refers to a layer having an oxygen transmission rate of 10 cc/ (m²•day•atm) or less when the thickness is 10 µm, or a layer having a water vapor transmission rate of 10 g/ (m²•day) or less when the thickness is 10 µm, without any limitation. That is, since performance may be different depending on the kind of gas, not necessarily appropriate to say, but the gas barrier film generally refers to a film or a layer having the aforementioned oxygen transmission rate performance or water vapor transmission rate performance.

Since the deposited layer formed of an inorganic compound has a gas barrier property, but has a defect such as a pinhole and a crack, its gas barrier performance is imperfect in many cases. In the present invention, by providing the gas barrier layer on the deposited layer, that defect is made up for and, thereby, the gas barrier property possessed by a resin exerts simultaneously, whereby, the gas barrier property is considerably improved. Further, in the present invention, for the purpose of imparting retort resistance, an overcoated layer formed of a specified resin is laminated on the gas barrier layer. Since many of resins having a gas barrier property contain a polar group for enhancing the cohesive force of a polymer, water absorbability is seen in many cases, making manifestation of retort resistance difficult. Although the mechanism of manifesting retort resistance by laminating the overcoated layer on the gas barrier layer is not clear, it is presumed that since the laminated overcoated layer acts as a water resistance layer and, at the same time, works as a layer of physically relaxing a stress leading to peeling, which is acted on the laminated gas barrier layer, retort resistance is manifested. In this respect, it is necessary that a resin forming the overcoated layer be a resin adhering firmly with a resin forming the gas barrier layer, and it is important to use a suitable resin depending on a resin forming the gas barrier film.

The gas barrier film of the present invention will be explained in detail below.

Examples of the substrate film used in the present invention include a polyolefin-based film such as low density polyethylene, high density polyethylene, straight low density polyethylene, and polypropylene, a polyester-based film such as polyethylene terephthalate, and polybutylene terephthalate, a polyamide-based film such as nylon 6, nylon 6,6, and metaxylene adipamide, a polyacrylonitrile-based film, a poly(meth)acryl-based film, a polystyrene-based film, a polycarbonate-based film, an ethylene-vinyl acetate copolymer saponified product-based film, a polyvinyl alcohol-based film, and a laminate of those films, and the film may be an unstretched film, or monoaxially or biaxially stretched film. Particularly, polyethylene terephthalate, which has been optionally stretched in two axial directions, is preferably used.

Alternatively, the substrate film may be subjected to surface treatment or undercoating treatment, if necessary. As the surface treatment, plasma treatment, ion beam treatment or sputtering treatment, or coating treatment can be performed. In the plasma treatment, for example, an oxygen gas, a nitrogen gas, a carbonic acid gas, or an argon gas, or a mixed gas of them can be used. In the sputtering treatment, various sputterings such as copper, cobalt, tin, nickel, Fe, silicon, aluminum, and titanium can be performed using the aforementioned various gases. These may be treated off-line, or in-line. In the undercoating treatment, coating with either of non-aqueous and aqueous-coating agents may be performed. Various coatings such as acryl system, ester system, epoxy system, urethane system, and ether system can be appropriately used.

The thickness of such a substrate film is not particularly limited, but the thickness is preferably around 1 to 100 µm, more preferably around 5 to 50 µm, particularly preferably around 10 to 30 µm.

The deposited layer formed of an inorganic compound provided on one side of the substrate film may be formed by any method such as deposition and sputtering. Examples of the inorganic compound forming the deposited layer include a metal oxide layer and a metal nitride layer. Examples of the metal oxide include aluminum oxide, magnesium oxide, titanium oxide, tin oxide, indium oxide alloy, silicon oxide and silicon oxide nitride, and examples of the metal nitride include aluminum nitride, titanium nitride and silicon nitride. Among them, from a viewpoint of the processing cost and the gas barrier property of the deposited film, as the inorganic compound, aluminum oxide, silicon oxide and silicon oxide nitride are preferable.

The gas barrier layer provided on the deposited layer in the present invention is formed of a polyepoxy-based cured product containing a skeleton structure represented by the following formula (1).

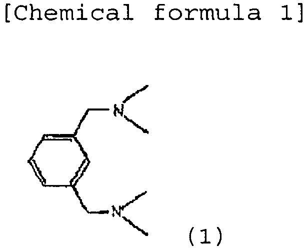

Herein, "formed of a polyepoxy-based cured product having a skeleton structure represented by the formula (1) "means that the polyepoxy-based cure product containing a skeleton structure represented by the formula (1) is contained in the gas barrier layer at 60% by weight or more, preferably 70% by weight or more.

Examples of a factor determining the gas barrier property of a thin membrane layer formed of a resin include a cohesion energy density, a free volume, a crystallization degree and orientation property. These factors rely on a side chain functional group in a polymer structure in many cases. That is, polymer chains containing a functional group capable of intermolecular interaction such as hydrogen bond and electrostatic interaction in a structure tend to strongly cohere using an interacting force as a driving force. As a result, the cohesion energy density, and orientation property are enhanced, the free volume is decreased, and the gas barrier property is improved. Conversely, when a polymer structure contains a sterically bulky functional group, it is thought that the gas barrier property is reduced because cohesion of a polymer is prevented, and the free volume is increased. Further, when the intermolecular interactions are increased, a driving force of strongly cohering and decreasing a free volume space is increased and, consequently, the cohesion density of a polymer is increased. The gas barrier property of a thin membrane layer formed of a resin not negligibly relies on what a skeleton, a polymer repetition unit consists of. For example, a polymer chain of a skeleton structure containing an aromatic ring becomes advantageous in that the crystallization degree is improved by exertion of interaction between its π electrons, or the free volume is reduced due to an increased cohesive force. The case where symmetry is better structurally is preferable from the aforementioned point of view.

The epoxy-based cured product will be explained in detail below.

It is necessary that the epoxy-based cured product forming the gas barrier layer related to the present invention contain a skeleton structure represented by the formula (1). The epoxy-based cured product related to the present invention is produced by a curing reaction between an epoxy resin and an epoxy resin curing agent. Therefore, the skeleton structure represented by formula (1) must be contained in at least one of the epoxy resin and the epoxy resin curing agent.

The epoxy resin may be any of a saturated or unsaturated aliphatic compound, an alicyclic compound, an aromatic compound, and a heterocyclic compound and, in view of manifestation of the high gas barrier property, an epoxy resin containing an aromatic ring in the molecule is preferable, and an epoxy resin containing the skeleton structure (1) in the molecule is employed. Specifically, an epoxy resin having a glycidylamine site derived from metaxylilenediamine, an epoxy resin having a glycidylamine site derived from 1,3-bis(aminomethyl)cyclohexanone, an epoxy resin having a glycidylamine site derived from diaminodiphenylmethane, an epoxy resin having a glycidylamine site and/or a glycidyl ether site derived from paraaminophenol, an epoxy resin having a glycidyl ether site derived from bisphenol A, an epoxy resin having a glycidyl ether site derived from bisphenol F, an epoxy resin having a glycidyl ether site derived from phenol novolak, and an epoxy resin having a glycidyl ether site derived from resorcinol can be used and, among them, an epoxy resin having a glycidylamine site derived from metaxylilenediamine, an epoxy resin having a glycidylamine site derived from 1,3-bis(aminomethyl)cyclohexanone, an epoxy resin having a glycidyl ether site derived from bisphenol F and an epoxy resin having a glycidyl ether site derived from resorcinol are preferable. It is preferable that an epoxy resin having a glycidyl ether site derived from bisphenol F, and an epoxy resin having a glycidylamine site derived from metaxylylenediamine be used as a main component, and it is particularly preferable that an epoxy resin having a glycidylamine site derived from metaxylilenediamine containing the skeleton structure represented by formula (1) be used as a main component. In order to improve various performances such as wet heat resistance, impact resistance and flexibility other than the gas barrier property, the aforementioned various epoxy resins may be used by mixing them at an appropriate ratio.

The epoxy resin curing agent forming the gas barrier layer related to the present invention may be any of an aliphatic compound, an alicyclic compound, an aromatic compound and a heterocyclic compound, and epoxy resin curing agents which are generally used, such as polyamines, phenols, acid anhydrides and carboxylic acids can be used. Specifically, examples of the polyamines include aliphatic amines such as ethylenediamine, diethylenetriamine, triethylenetetramine, and tetraethylenepentamine, aliphatic amines having an aromatic ring such as metaxylilenediamine, and paraxylilenediamine, alicyclic amines such as 1,3-bis(aminomethyl)cyclohexanone, isophoronediamine, and norbornanediamine, and aromatic amines such as diaminodiphenylmethane, and metaphenylenediamine. A reaction product with an epoxy resin or a monoglycidyl compound using these polyamines as a raw material, a reaction product with alkylene oxide of a carbon number of 2 to 4, a reaction product with epichlorohydrin, a reaction product with a polyfunctional compound having at least one acyl group, which can form an amido group site by a reaction with these polyamines to form an oligomer, and a product of a reaction between a polyfunctional compound having at least one acyl group, and monovalent carboxylic acid and/or a derivative thereof, which can form an amido group site by a reaction with these polyamines to form an oligomer can be used. Examples of the phenols include multi substituents monomers such as catechol, resorcinol, and hydroquinone, and a resol-type phenol resin. As the acid anhydride or the carboxylic acid, aliphatic acid anhydrides such as dodecenylsuccinic anhydride, and polyadipic anhydride, alicyclic acid anhydrides such as (methyl)tetrahydrophthalic anhydride, and (methyl)hexahydrophthalic anhydride, aromatic acid anhydrides such as phthalic anhydride, trimellitic anhydride, and pyromellitic anhydride, and carboxylic acid can be used.

As described above, in view of manifestation of the high gas barrier property, an epoxy resin curing agent containing an aromatic site in the molecule is preferable, and an epoxy resin curing agent containing the skeleton structure (1) in a molecule is employed. Specifically, it is more preferable to use a reaction product with metaxylylenediamine or paraxylylenediamine, or an epoxy resin by using them as a raw material, or a monoglycidyl compound, a reaction product with alkylene oxide of a carbon number of 2 to 4, a reaction product with epichlorohydrin, a reaction product with a polyfunctional compound having at least one acyl group, which can form an amido group site by a reaction with these polyamines to form an oligomer, or a product of a reaction between a polyfunctional compound having at least one acyl group, which can form an amido group site by reaction with these polyamines, and monovalent carboxylic acid and/or a derivative thereof. Further, it is particularly preferable to use a reaction product with metaxylylenediamine containing the skeleton structure represented by the formula (1), or an epoxy resin by using this as a raw material, or a monoglycidyl compound, a reaction product with alkylene oxide of a carbon number of 2 to 4, a reaction product with epichlorohydrin, a reaction product with a polyfunctional compound having at least one acyl group, which can form an amido group site by a reaction with these polyamines to form an oligomer, a polyfunctional compound having at least one acyl group, which can form an amido site by a reaction with these polyamines, or a reaction product with monovalent carboxylic acid and/or a derivative thereof.

The content of the skeleton structure represented by formula (1) in the epoxy-based cured product forming the gas barrier layer is preferably 40% by weight or more, more preferably 45% by weight or more, particularly preferably 50% by weight or more. By inclusion of the skeleton structure of the formula (1) at a high ratio, the gas barrier property of the gas barrier layer is more enhanced.

Examples of a solvent of a coating solution used in forming the gas barrier layer in the present invention include toluene, xylene, ethyl acetate, butyl acetate, acetone, methyl ethyl ketone, methyl isobutyl ketone, tetrahydrofuran, dimethylformamide, dimethylacetamide, methanol, ethanol and water, and the nature of the coating solution may be any of an emulsion type and a dissolution type.

The overcoated layer provided on the gas barrier layer in the present invention, when the gas barrier layer is formed of a polyepoxy-based cured product containing a skeleton structure represented by the formula (1), is formed of at least one kind resin selected from the group consisting of a polyepoxy resin and a polyester resin. Herein, "formed of at least one kind resin selected from the group consisting of a polyepoxy resin and a polyester resin" means that at least one kind resin selected from the group consisting of a polyepoxy resin and a polyester resin is contained in the overcoated layer at 70% by weight or more, preferably 80% by weight or more.

Examples of the property that is imparted by provision of the overcoated layer include retort resistance and blocking resistance. A resin used in the gas barrier layer has, in many cases, many polar groups having a strong cohesion force in order to improve the gas barrier property. The resin has low adherence, particularly low water resistant adherence on a substrate film in many cases, and is insufficient in retort resistance in some cases. As a means to improve this point, a method of providing an adhesive layer between the deposited layer and the gas barrier layer on the substrate film is contemplated, but in order to greatly improve the gas barrier property, it is preferable to provide the gas barrier layer directly on the deposited layer. This depends on whether a defect such as a crack and a pinhole in the deposited layer is filled with a gas barrier resin or not. As other means to improve the low water resistant adherence, a means to relax a stress exerted when a coated membrane is peeled from the substrate film is contemplated. That is, this is a method of relaxing a stress for peeling an interface between the substrate film and the gas barrier layer by providing another resin layer on the gas barrier layer. In this respect, in order to manifest a strong water resistant adhering force, that is, retort resistance, it is necessary that a resin forming the overcoated layer and a resin forming the gas barrier layer be adhered firmly. In addition, since the resin used in the gas barrier layer contains many polar groups as described above, when a product roll of a coating film is stored particularly under high temperature and high humidity, blocking is caused, resulting in a defective product. In the gas barrier film of the present invention, since the overcoated layer is provided, and the gas barrier layer is not situated on an uppermost surface of a film, blocking can be prevented.

As a polyester resin forming the overcoated layer of the present invention, a polyester resin obtained from a reaction between a polyol component such as polyester polyol, and a polyisocyanate component can be used. Examples of the polyester polyol include polyester polyol obtained by reacting polyvalent carboxylic acid or a dialkyl ester thereof, or a mixture thereof, and a glycol or a mixture thereof. Examples of the polyvalent carboxylic acid include aromatic polyvalent carboxylic acids such as isophthalic acid, terephthalic acid and naphthalenedicarboxylic acid, and aliphatic polyvalent carboxylic acids such as adipic acid, azelaic acid, sebacic acid, and cyclohexanecarboxylic acid. Examples of the glycol include ethylene glycol, propylene glycol, diethylene glycol, butylene glycol, neopentyl glycol, and 1,6-hexanediol. The polyisocyanate used in combination with the polyol component includes, for example, aromatic polyisocyanate and aliphatic polyisocyanate. Examples of the aromatic polyisocyanate include 2,4- or 2,6-tolylene diisocyanate (TDI), m- or p-phenylene diisocyanate, 4,4-diphenyl diisocyanate, 4,4'- or 2,4'- or 2,2'-diphenylmethane diisocyanate (MDI), 1,5-naphthalene diisocyanate (NDI), 3,3'-dimethyl-4,4-diphenylene diisocyanate, 3,3'-dimethoxy-4,4'-diphenylene diisocyanate, 1,5-tetrahydronaphthalene diisocyanate, 4,4'-diphenyl ether diisocyanate, 1,3- or 1,4-xylylene diisocyanate (XDI), 1,3- or 1,4-tetramethylxylylene diisocyanate (TMXDI). Examples of the aliphatic polyisocyanate include trimethylene diisocyanate, tetramethylene diisocyanate, pentamethylene diisocyanate, 1,6-hexamethylene diisocyanate (HDI), 1,2-propylene diisocyanate, 1,2-, 2,3- or 1,3-butylene diisocyanate, 2,4,4- or 2,2,4-trimethylhexamethylene diisocyanate, trimethylhexamethylene diisocyanate, 1,3 or 1,4-cyclohexane diisocyanate, 1,3- or 1,4-bis(isocyanatemethyl)cyclohexane (hydrogenated XDI), 3-isocyanatemethyl-3,5,5-trimethylcyclohexyl isocyanate (isophorone diisocyanate; IPDI, 4,4'-, 2,4'- or 2,2'-dicyclohexylmethane diisocyanate (hydrogenated MDI), methyl-2,4-cyclohexane diisocyanate, methyl-2,6-cyclohexane diisocyanate and 3,3'-dimethyl-4,4'-dicyclohexylmethane diisocyanate. Further examples include polyfunctional polyisocyanate compounds such as isocyanurate, burette and allophanate derived from the aforementioned polyisocyanate monomers, and polyfunctional polyisocyanate compounds containing a terminal isocyanate group obtained by a reaction with a tri- or more- functional polyol compound such as trimethylolpropane and glycerin. The weight ratio of polyester polyol and polyisocyanate is preferably 5:95 to 99:1, more preferably 10:90 to 98:2.

Examples of a solvent of a coating solution used in forming the overcoated layer of the present invention include toluene, xylene, ethyl acetate, butyl acetate, acetone, methyl ethyl ketone, methyl isobutyl ketone, tetrahydrofuran, dimethylformamide, dimethylacetamide, methanol, ethanol and water, and a nature of the coating solution may be any of an emulsion type and a dissolution type.

As a resin forming the gas barrier layer and the overcoated layer of the present invention, the aforementioned resins are used and, among them, a combination of forming the gas barrier layer of the polyepoxy-based cured product containing a skeleton structure represented by formula (1), and forming the overcoated layer of a polyepoxy resin not containing the skeleton structure represented by formula (1) is preferable. The reason is that the polyepoxy-based cured product forming the gas barrier layer and the epoxy resin forming the overcoated layer have high compatibility and affinity, and have a strong interlayer adhering force due to a physical adsorbing force and a chemical adsorbing force.

A thermal stabilizer, an antioxidant, an strengthening agent, a pigment, a degradation preventing agent, a weather resistant agent, a flame retardant, a plasticizer, a releasing agent, and a gliding agent may be added to a coating solution used in forming the gas barrier layer and the overcoated layer of the present invention as far as the property thereof is not deteriorated.

Examples of such thermal stabilizer, antioxidant and degradation preventing agent include hindered phenols, a phosphorus compound, hindered amines, a sulfur compound, a copper compound, and a halide of an alkali metal.

Examples of the strengthening agent include clay, talc, calcium carbonate, zinc carbonate, wollastonite, silica, alumina, magnesium oxide, calcium silicate, sodium aluminate, sodium aluminosilicate, magnesium silicate, glass balloon, carbon black, zinc oxide, zeolite, hydrotalcite, metal fiber, metal whisker, ceramic whisker, potassium titanate whisker, boron nitride, graphite, glass fiber, and carbon fiber.

An inorganic layered compound may be mixed in a coating solution used in forming the gas barrier layer and the overcoated layer of the present invention. Preferable examples of the inorganic layered compound include montmorillonite, beidellite, saponite, hectorite, sauuconite, vermiculite, fluorine mica, white mica, palagonite, bronze mica, black mica, lepidolite, margarite, clintonite and anandite, and swelling fluorine mica or montmorillonite are particularly preferable.

These inorganic layered compounds may be naturally occurring or artificially synthesized or modified, or those compounds may be treated with an organic substance such as an onium salt.

A method of forming the gas barrier layer and the overcoated layer of the present invention is not particularly limited, but a method depending on the substrate film can be applied and, for example, a roll coating method, a dip coating method, a bar coating method and a die coating method, and a method of combining them can be utilized. Among them, the die coating method is preferable because of increase in stability of the coating layer forming composition. As a step of providing two resin layers on the deposited layer, any method of two-pass double-layer coating which uses a coater having one coating device two times, and one-pass double-layer coating which uses a coater having two coating devices once can be utilized.

The thickness of the gas barrier layer provided on the deposited layer is preferably 0.1 to 5 µm, more preferably 0.2 to 3 µm. When the thickness of the gas barrier layer is 0.1 µm or more, sufficient improvement in the gas barrier property is obtained , processibility at coating is enhanced, and a gas barrier layer without defects such as membrane breakage and repellency can be formed. On the other hand, when the thickness of the gas barrier layer is 5 µm or less, since a solvent is sufficiently dried even under the drying condition at coating under low temperature and short time, deformation such as curling is not generated on the film, and a problem of increase in the manufacturing cost is not generated, which is preferable.

The thickness of the overcoated layer provided on the gas barrier layer is 0.3 to 3 µm. When the thickness of the gas barrier layer is 0.3 µm or more, sufficient improvement in retort resistance is obtained, processibility at coating is enhanced, and the overcoated layer without defects such as membrane breakage and repellency can be formed. On the other hand, when the thickness of the overcoated layer is 3µm or less, since a solvent is sufficiently dried even under the drying condition at coating under lower temperature and shorter time as in the case of the gas barrier layer, deformation such as curling is not generated on a film, and a problem of increase in the manufacturing cost is not caused, which is preferable.

In the case where the gas barrier layer and the overcoated layer are formed and laminated on the deposited layer by coating in the present invention, it is preferable that the layers be dried at a temperature of preferably 70°C or higher, more preferably 90°C or higher, depending on the solvent used in the coating solution. When the drying temperature is lower than 70°C, drying of the coated membrane becomes insufficient, and it becomes difficult to obtain a film having sufficient gas barrier property. When the situation of such insufficient drying of the coated membrane is generated in a production step of two-pass double-layer coating, it is presumed that a wound intermediate product generates blocking and, when a similar situation is generated in a production step of one-pass double-layer coating, upon coating of the overcoated layer, the overcoated layer is mixed with the gas barrier layer, and sufficient performance is not manifested in some cases. Since at too short heat treating time drying becomes insufficient like the drying temperature, usually, the time is suitably 1 second or longer, further preferably 3 seconds or longer.

### Examples

The following Examples 1 and 2 illustrate the present invention. Examples 3 to 5 are Reference Examples, included for information. In Examples, "part" means "part by weight" unless otherwise is indicated.

### <Method of assessing property>

Assessment of the property used in the explanation of the present invention is as follows.

### (1) Oxygen transmission rate

Using an oxygen transmission rate measuring device (Model name, OXTRAN (registered trade mark) (OXTRAN 2/20)) manufactured by MOCON, USA under the condition of a temperature of 23°C and a humidity of 0% RH, an oxygen transmission rate was measured based on B method (isobaric method) described in JIS K7126 (2000 edition). In this respect, two test pieces were used in each of Examples and Comparative Examples. An average of measured values on each test piece was adopted as an oxygen transmission rate in each of the Examples and Comparative Examples.

### (2) Water vapor transmission rate

Using a water vapor transmission rate measuring device (Model name, PERMTRAN (registered trademark) W3/31) manufactured by MOCON, USA under the condition of a temperature of 40°C and a humidity of 90% RH, a water vapor transmission rate was measured based on B method (infrared sensor method) described in JIS K7129 (2000 edition). In this respect, two test pieces were used in each of the Examples and Comparative Examples. An average of measured values on each test piece was adopted as a water vapor transmission rate in each of the Examples and Comparative Examples.

### (3) Dry laminate (DL) strength

From laminated films made in the Examples and Comparative Examples, a reed sample, 15 mm in width (TD direction) and 200 mm in length (MD direction) was excised. The reed sample was pulled using a tensile testing machine at a pulling rate of 300 mm/min in a T-type peeling manner (peeling surface angle: 90°) while a substrate film was grasped with one short side of the reed sample, and a sealant film was grasped with another short side, and the dry laminate (DL) strength between the substrate film and the sealant film was measured. Also regarding a sample after retort treatment described below, a DL strength was measured by a similar method. Measurement was performed on two samples, and an average of two measured values was adopted as a value of a dry laminate (DL) strength in each of the Examples and Comparative Examples.

### (4) Retort resistance assessment

Each of four laminated films (15 cm square) made in the Examples and Comparative Examples were prepared. Two laminated films were piled so that sealant film surfaces are faced, and end parts of three sides were heat-sealed using a heat sealer. Then, 100 g of tap water were placed therein, and an end part of a remaining one side was heat-sealed to make a 15 cm square package. Two packages were prepared for each of the Examples and Comparative Examples. Then, the packages were retort-treated (120 °C, 1 kgf/cm², 30 minutes) using an autoclave SR-240 manufactured by TOMY SEIKO CO.,LTD. After treatment, the package was broken to drain tap water and, regarding two packages, each laminated film which had been retort-treated was visually tested to determine whether appearance change such as whitening, or peeling (delamination) was seen or not.

Assessment was performed at 3 stages according to the following, and assessment results are shown in Table 2.
(a) Excellent (in Table 2, expressed by symbol "○") : Defective appearance such as whitening, and delamination was not observed in both packages.
(b) Normal (in Table 2, expressed by symbol "Δ") : Defective appearance such as whitening, and delamination was observed in a part (area) in either one of packages (in both packages, delamination was not seen over the whole (area)).
(c) Defective (in Table 2, expressed by symbol "×") : In either one of packages, defective appearance such as whitening, and delamination was observed in the whole (area).

Then, from two packages after retort treatment, a reed sample, 15 mm in width (TD direction) and 200 mm in length (MD direction) was excised. According to the method of item (4), a DL strength after retort treatment was measured. In this respect, a laminated film in which peeling (delamination) between the substrate film and the sealant film was seen on a part or the whole thereof accompanied with retort treatment, was not measured, and 0 was adopted as the strength.

### (5) Assessment of blocking resistance

From coating films made in the Examples and Comparative Examples, 10 films 10 cm square, were excised. The 10 films were piled so that the overcoated layer and the substrate film were faced, a metal weight (1 kg) having a bottom of the same area was placed thereon, and this was stored in a wet heating oven regulated at 40°C and 90% RH for 1 week.

Assessment was performed at 3 stages according to the following, and assessment results are shown in Table 2.
(a) Excellent (in Table 2, expressed by symbol "○") : Adhesion between films is not seen in taken out samples.
(b) Normal (in Table 2, expressed by symbol "Δ") : Adhesion between films is seen in a part of taken out samples.
(c) Defective (in Table 2, expressed by symbol "×") : Adhesion between films is seen in all of taken out samples (over the whole surface of all the samples).

### Example 1

A polyepoxy-based resin coating agent, MAXIVE M-100 (base resin) 10.0 parts, manufactured by Mitsubishi gas chemical containing a skeleton structure represented by the formula (1), M-93 (curing agent) 32.1 parts, methanol 99.2 parts and ethyl acetate 12.2 parts were stirred for 30 minutes to prepare a gas barrier coating solution 1 having a solid matter concentration of 20% by weight.

As a substrate film on which a deposited layer was provided, Barrialox (registered trademark) 1011HG manufactured by Toray Advanced Film Co., Ltd, in which an aluminum oxide layer was provided on one side of a biaxially stretched polyethylene terephthalate film, was prepared. A gas barrier coating solution 1 was coated on this deposited layer by using a wire bar, and dried at 140°C for 30 seconds to provide a gas barrier layer formed of a polyepoxy-based cured product containing a skeleton structure represented by the formula (1) having a thickness of 0.8µm.

Then 10 parts of a polyepoxy-based resin coating agent No.8800 manufactured by Tanaka Chemical Industries, Ltd. not containing a skeleton structure represented by formula (1), and 18 parts of methyl ethyl ketone were stirred for 30 minutes to prepare an overcoating solution 1 having a solid matter concentration of 10% by weight.

The overcoating solution 1 was coated on the gas barrier coated layer with a wire bar, and dried at 140°C for 30 seconds to provide an overcoated layer formed of a polyepoxy resin having a thickness of 0.8 µm. Thus, a coating film 1 was obtained.

20 parts of an adhesive for dry lamination AD-503 manufactured by Toyo-Morton, Ltd., 1 part of a curing agent CAT-10 manufactured by Toyo-Morton, Ltd., and 20 parts of ethyl acetate were weighed, and stirred for 30 minutes to prepare an adhesive solution for dry lamination having a solid matter concentration of 19% by weight.

This adhesive solution was coated on an overcoated surface of the resulting coating film 1 with a wire bar, and dried at 80°C for 45 seconds to form an adhesive layer of 3.5 µm.

Then, an unstretched polypropylene film ZK93K manufactured by Toray Advanced Film Co., Ltd as a sealant film was piled on the adhesive layer so that a corona-treated surface was faced with the adhesive layer, and they were laminated using a hand roller. This laminated film was aged in an oven heated at 40°C for 2 days to obtain a laminated film 1.

### Example 2

A polyester-based coating agent MET No. 720 NT 10.0 parts manufactured by Dainippon Ink and Chemicals, Incorporated, a curing agent KO-55 0.1 part manufactured by Dainippon Ink and Chemicals, Incorporated, and 20.5 parts of ethyl acetate were weighed, and stirred for 30 minutes to prepare an overcoating solution 2 having a solid matter concentration of 10% by weight. According to the method of Example 1 except that an overcoated layer formed of a polyester resin was provided using the above-prepared overcoating solution 2 in place of the overcoating solution 1, a coating film 2 and a laminated film 2 were obtained.

### Example 3 (Reference)

A polyacryl-based resin coating agent LC-VM coating agent B 10.0 parts manufactured Tokyo Printing Ink Mfg. Co., Ltd., a curing agent LG-VM curing agent D 1.0 part manufactured by Tokyo Printing Ink Mfg. Co., Ltd., and ethyl acetate 5.0 parts were stirred for 30 minutes to prepare an overcoating solution 3 having a solid matter concentration of 9.4% by weight. According to the method of Example 1 except that an overcoated layer formed of a polyacryl resin was provided using the above-prepared overcoating solution 3 in place of the overcoating solution 1, a coating film 3 and a laminated film 3 were obtained.

### Example 4 (Reference)

As a gas barrier coating solution 3, a polyurethane-based resin Takelak WPB-163-1 (gas barrier coating solution 2, solid matter concentration: 25% by weight) manufactured by Mitsui Chemicals, Inc. was prepared. According to the method of Example 1 except that a gas barrier layer formed of a polyurethane resin was provided using the gas barrier coating solution 3 in place of the gas barrier coating solution 1, and an overcoating layer formed of a polyester resin was provided using the overcoating solution 2 in place of the overcoating solution 1, a coating film 4 and a laminated film 4 were obtained.

### Example 5 (Reference)

According to the method of Example 1 except that a gas barrier layer formed of a polyurethane resin was provided using the gas barrier coating solution 2 in place of the gas barrier coating solution 1 as a gas barrier coating solution, and an overcoated layer formed of a polyacryl resin was provided using the overcoating solution 3 in place of the overcoating solution 1, a coating film 5 and a laminated film 5 were obtained.

### Comparative Example 1

According to the method of Example 1 except that an overcoated layer was not formed, a coating film 6 and a laminated film 6 were obtained.

### Comparative Example 2

5.0 parts of Poval (registered trademark) 124 (polyvinyl alcohol saponification degree 98 to 99%, average polymerization degree about 2400) manufactured by Kuraray Co., Ltd were dissolved in 95.0 parts of hot water. The solution was cooled to room temperature to prepare an overcoating solution 4 having a solid matter concentration of 5% by weight. According to the method of Example 1 except that an overcoated layer formed of a polyvinyl alcohol resin was provided using the overcoating solution 4 prepared as described above in place of the overcoating solution 1, a coating film 7 and a laminated film 7 were obtained.

### Comparative Example 3

According to the method of Example 1 except that the order of coating of the gas barrier layer and that of the overcoated layer was exchanged, a coating film 8 and a laminated film 8 were obtained.

### Comparative Example 4

According to the method of Example 4 except that an overcoated layer was not formed, a coating film 9 and a laminated film 9 were obtained.

### Comparative Example 5

According to the method of Example 4 except that an overcoated layer formed of a polyepoxy resin not containing a skeleton structure represented by the formula (1) was provided using the overcoating solution 1 in place of the overcoating solution 2, a coating film 10 and a laminated film 10 were obtained.

### Comparative Example 6

According to the method of Example 4 except that the order of coating of the gas barrier layer and that of the overcoated layer was exchanged, a coating film 11 and a laminated film 11 were obtained.

Results of Examples 1 to 5 and Comparative Examples 1 to 6 are shown in Table 1.

**[Table 1]**

| | Substrate film on which deposited layer is provided | Gas barrier layer | | Overcoated layer | |
|---|---|---|---|---|---|
| | | Resin species | Thickness | Resin species | Thickness |
| | | | [µm] | | [µm] |
| Example 1 | | MAXIVE manufactured by Mitsubishi gas chemical | 0.8 | No.8800 manufactured by Tanaka Chemical Industries | 0.8 |
| Example 2 | | | | MET No.720NT manufactured by Dainippon Ink and Chemicals | 0.6 |
| *Example 3 | | | | Manufactured by Tokyo Printing Ink Mfg. Co., Ltd. | 0.8 |
| *Example 4 | | Takelak WPB-163-1 manufactured by Mitsui Chemicals | 0.9 | MET No.720NT manufactured by Dainippon Ink and Chemicals | 0.6 |
| *Example 5 | | | | Manufactured by Tokyo Printing Ink Mfg. Co., Ltd. | 0.8 |
| Comparative Example 1 | Barrialox 1011HG | MAXIVE manufactured by Mitsubishi gas chemical | 0.8 | - | - |
| Comparative Example 2 | | | | Poval 124 manufactured by Kuraray Co., Ltd | 0.5 |
| Comparative Example 3 | | No.8800 manufactured by Tanaka Chemical Industries | 0.8 | MAXIVE manufactured by Mitsubishi gas chemical | 0.8 |
| Comparative Example 4 | | Takelak WPB-163-1 manufactured by Mitsui Chemicals | 0.9 | - | - |
| Comparative Example 5 | | | 0.8 | No.8800 manufactured by Tanaka Chemical Industries | 0.8 |
| Comparative Example 6 | | MET No.720NT manufactured by Dainippon Ink and Chemicals | 0.6 | Takelak WPB-163-1 manufactured by Mitsui Chemicals | 0.9 |

| | | | | | |
|---|---|---|---|---|---|
| *Reference Examples. | | | | | |

**[Table 2]**

| | Physical property of coating film | | | Retort resistance | | Blocking resistance |
|---|---|---|---|---|---|---|
| | Oxygen transmission rate | Water vapor transmission rate | DL strength | DL strength | Appearance | |
| | | | | | | |
| Example 1 | 0.2 | 0.2 | Fx | Fx | ○ | ○ |
| Example 2 | 0.2 | 0.3 | Fx | Fx | ○ | ○ |
| *Example 3 | 0.2 | 0.3 | Fx | 280 | ○ | ○ |
| *Example 4 | 0.2 | 0.3 | Fx | Fx | ○ | ○ |
| *Example 5 | 0.3 | 0.3 | Fx | 300 | ○ | ○ |
| Comparative Example 1 | 0.2 | 0.3 | Fx | 0 | × | × |
| Comparative Example 2 | Less than 0.1 | 0.3 | 220 | 0 | × | ○ |
| Comparative Example 3 | 0.8 | 0.5 | Fx | Fx | ○ | × |
| Comparative Example 4 | 0.3 | 0.4 | Fx | 150 | Δ | Δ |
| Comparative Example 5 | 0.3 | 0.3 | 200 | 100 | Δ | ○ |
| Comparative Example 6 | 0.9 | 0.5 | Fx | 120 | Δ | Δ |

| | | | | | | |
|---|---|---|---|---|---|---|
| Note) In the Table, "Fx" indicates that the substrate film was cut during measurement of DL strength, and it is seen that the laminated film has a sufficient adhering force. *Reference Examples. | | | | | | |

By comparing respective Examples and Comparative Examples, the following is seen.

### (1) Comparison between Examples 1 to 5, and Comparative Examples 1 and 4

When compared with films of Comparative Example 1 and Comparative Example 4 on which only the gas barrier layer was formed on the deposited layer, it is seen that films of Examples 1 to 5, on which the overcoated layer was provided, retain a strong adhering force also after retort treatment, and have considerably improved retort resistance.

It is seen that, in films of Comparative Example 1 and Comparative Example 4, blocking was generated on a part or the whole of the surface in a blocking resistance test, while in films of Examples 1 to 5 on which the overcoated layer was provided, no blocking was generated, and production suitability is excellent.

### (2) Comparison between Examples 1 to 3 and Comparative Example 2, and Comparison between Examples 4 to 5 and Comparative Example 5

It is seen that even when a resin forming the gas barrier layer is the same, there is no retort resistance in an adhering strength depending on a resin forming the overcoated layer, and there arises a problem that the laminated film is delaminated (peeled) at heat sterilization treatment. That is, it is seen that, in order to manifest retort resistance, it is necessary to select a resin depending on the resin forming the gas barrier layer to form an overcoated layer.

### (3) Comparison between Example 1 and Comparative Example 3, and comparison between Example 4 and Comparative Example 6

A difference is seen in the oxygen barrier property and the water vapor barrier property depending on whether the gas barrier layer provided on the deposited layer is formed of a resin having the gas barrier property or not.
Particularly, when Example 1 and Comparative Example 3 are compared, even in the case of the gas barrier layer formed of a polyepoxy resin, it is necessary to include the skeleton structure of formula (1) in order to have a high gas barrier property.

### (4) Summary

As apparent from the foregoing results of respective Examples and Comparative Examples, the gas barrier film of the present invention has higher barrier property on oxygen and water vapor, and higher retort resistance than the coating film not having the overcoated layer, and is also excellent in production suitability.

### INDUSTRIAL APPLICABILITY

The gas barrier film of the present invention can be, representatively, applied as a barrier film for wrapping various foods, such as a gas barrier film for retort which is used for food wrapping.

It is thought that, by utilizing good properties thereof, the gas barrier film can be developed as a barrier film in various fields without being limited to food wrapping. For example, there can be exemplified utility in medicament wrapping and utility in wrapping industrial products such as electronic parts.

## Claims

1. A gas barrier film **characterized in that** a deposited layer formed of an inorganic compound is provided on one side of a substrate film, a gas barrier layer formed of a polyepoxy based cure product containing a skeleton structure represented by the following formula (1) is provided on the deposited layer, and an overcoated layer having a thickness of 0.3 to 3µm and formed of at least one kind selected from the group consisting of a polyepoxy resin and a polyester resin is provided on the gas barrier layer.

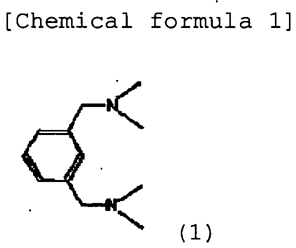

2. The gas barrier film according to claim 1, wherein the overcoated layer is formed of a polyepoxy resin not containing a skeleton structure represented by formula (1).

3. The gas barrier film according to claim 1 or 2, wherein the inorganic compound forming the deposited layer is a metal oxide.

4. The gas barrier film according to claim 3, wherein the metal oxide is at least one kind selected from the group consisting of aluminum oxide, silicon oxide and silicon oxide nitride.

5. Use of a gas barrier film as claimed in any one of claims 1 to 4, in a retort.

## Patentansprüche

1. Gassperrfolie, **dadurch gekennzeichnet, dass** eine aus einer anorganischen Verbindung gebildete aufgebrachte Schicht auf einer Seite eines Substratfilms bereitgestellt ist, eine aus einem Härtungsprodukt auf Polyepoxidbasis gebildete Gassperrschicht, die eine durch die Formel (1) dargestellte Gerüststruktur enthält, auf der aufgebrachten Schicht bereitgestellt ist und eine Überzugsschicht mit einer Dicke von 0,3 bis 3 µm, die aus zumindest einem aus der aus einem Polyepoxidharz und einem Polyesterharz bestehenden Gruppe ausgewählten Harz besteht, auf der Gassperrschicht bereitgestellt ist.

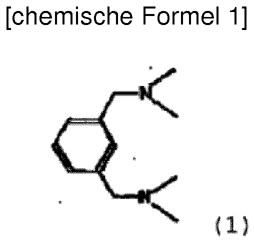

2. Gassperrfolie nach Anspruch 1, worin die Überzugsschicht aus einem Polyepoxidharz gebildet ist, das keine durch Formel (1) dargestellte Gerüststruktur enthält.

3. Gassperrfolie nach Anspruch 1 oder 2, worin die anorganische Verbindung, aus der die aufgebrachte Schicht gebildet ist, ein Metalloxid ist.

4. Gassperrfolie nach Anspruch 3, worin das Metalloxid zumindest ein aus der aus Aluminiumoxid, Siliciumoxid und Siliciumoxidnitrid bestehenden Gruppe ausgewähltes Oxid ist.

5. Verwendung einer Gassperrfolie nach einem der Ansprüche 1 bis 4 in einer Retorte.

## Revendications

1. Film barrière aux gaz, **caractérisé en ce qu'**une couche déposée formée à partir d'un composé inorganique est réalisée sur un côté d'un film de substrat, une couche barrière aux gaz formée en un produit durci à base de polyépoxy contenant une structure de squelette représentée par la formule suivante (1) est réalisée sur la couche déposée, et une couche de revêtement d'une épaisseur de 0,3 à 3 µm et formée à partir d'au moins un type sélectionné dans le groupe consistant en une résine de polyépoxy et une résine de polyester est réalisée sur la couche barrière aux gaz.

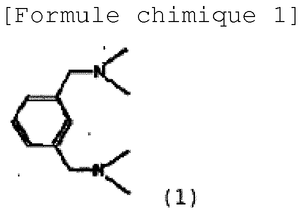

2. Film barrière aux gaz selon la revendication 1, dans lequel la couche de recouvrement est formée en une résine de polyépoxy ne contenant pas de structure de squelette représentée par la formule (1).

3. Film barrière aux gaz selon la revendication 1 ou 2, dans lequel le composé inorganique formant la couche déposée est un oxyde de métal.

4. Film barrière aux gaz selon la revendication 3, dans lequel l'oxyde de métal est au moins un type sélectionné dans le groupe consistant en oxyde d'aluminium, oxyde de silicium et de nitrure d'oxyde de silicium.

5. Utilisation d'un film barrière aux gaz selon l'une quelconque des revendications 1 à 4, dans une cornue.
